# EUROPEAN PATENT SPECIFICATION

(11) **EP 0 948 897 B1**
(45) Date of publication and mention of the grant of the patent: **30.07.2003**
(21) Application number: 99201116.3
(22) Date of filing: 07.04.1999
(51) Int. Cl.: A23C 19/08, A23C 19/09

(54) **Spreadable Cheese**
Streichfähiger Käse
Fromage à tartiner

(30) Priority: 07.04.1998 NL 1008834
(43) Date of publication of application: 13.10.1999
(73) Proprietor: Friesland Brands B.V., 8937 AC Leeuwarden (NL)
(72) Inventor: Van Arem, Everhardus J. F., 8802 CR Franeker (NL); Van den Berg, Gerard, 6713 MT Ede (NL)
(74) Representative: Prins, Adrianus Willem

(56) References cited:
- EP-A- 0 535 728
- US-A- 1 522 383
- US-A- 1 522 794
- US-A- 2 009 238
- US-A- 5 750 177
- PATENT ABSTRACTS OF JAPAN vol. 098, no. 002, 30 January 1998 (1998-01-30) & JP 09 262054 A (SNOW BRAND MILK PROD CO LTD), 7 October 1997 (1997-10-07)
- PATENT ABSTRACTS OF JAPAN vol. 015, no. 056 (C-0804), 8 February 1991 (1991-02-08) & JP 02 286061 A (SNOW BRAND FOOD CO LTD), 26 November 1990 (1990-11-26)
- PATENT ABSTRACTS OF JAPAN vol. 097, no. 008, 29 August 1997 (1997-08-29) & JP 09 103243 A (SNOW BRAND MILK PROD CO LTD), 22 April 1997 (1997-04-22)

## Description

The invention relates to a spreadable cheese or a spreadable cheese product and to a method for preparing such a product with the flavor of ripened cheese from a mixture of ripened and unripened cheese in the absence of melting salts. More in particular, the invention relates to a method for preparing a cheese product that is spreadable and/or pumpable and has a smooth structure.

With both the consumer and the food industry a demand exists for cheese products that are readily processable. Thus, for the sake of convenience, the consumer has an apparent demand for spreadable cheese. Besides, the food industry has a need for a cheese product that is pumpable and can thus be readily metered, for example for use on pizzas, toasted sandwiches and the like. A pumpable cheese product offers quite a lot of possibilities to create different final products, in particular because it gives much scope for adding additives, such as bacteria, biocultures, colorings, condiments, fruits, calcium and the like, and for delivering the final product in any desired form.

Spreadable and pumpable cheese products are known per se. They are prepared by heating naturally ripened cheese with an emulsifier added thereto at an appropriate temperature. If such emulsifiers are used, this is mostly done in the form of so-called melting salts. The emulsifiers ensure that a product is obtained which is microbiologically more stable, undergoes no further ripening and does not turn during further heating. A pasteurization ensures that the product is microbiologically stable and does not ripen any further. The melting salts prevent the cheese from turning, which means that the cheese separates into a fat fraction and a water fraction. Many employed melting salts are phosphates and citrates.

The known spreadable cheese products are generally uniform as regards texture, color and in particular flavor. It is not possible to ripen such cheese products to influence their flavor, because the bacterial cultures ensuring this are inactivated during the pasteurization.

There is thus an apparent need for a spreadable or pumpable "living" cheese product with the flavor of a naturally ripened cheese.

Such cheese products are known from, for example, European patent EP-0 535 728 B1. Described therein is a cheese product composed of unripened and ripened cheese, in which the proportion of the unripened cheese varied between 30 and 90 wt.%. The present inventors have found that reproduction of the method according to the above European patent gives a product with a moisture content of about 50 wt.% and a consistency described by those skilled in the art as "semolina-like", that is to say a mass having therein a soft granular structure. In this connection reference is made to Example 3 (vide infra). This semolina-like consistency is attributed by the present inventors to an unduly high content of unripened proteins. When the moisture content was further increased to 60 wt.% (and a fat content of 40 wt.%, based on the dry substance), a smooth homogeneous product satisfying the requirements was not obtained either.

The known product contains a relatively high proportion of unripened cheese so as to obtain a smoothness sufficient to render the product suitable for pumping or spreading. A drawback of such a relatively high content of unripened cheese is the occurrence of a fading flavor, which means that the flavor of the ripened cheese added has less effect through dilution. Another drawback is that, to obtain a sufficient flavor of ripened cheese, the product must undergo afterripening for a longer period.

It is an object of the invention to provide a cheese product that does not have the above problems.

It is a further object of the invention to provide a method for preparing a cheese product from a mixture of unripened and at least one ripened cheese at a temperature below the pasteurization temperature.

It is a further object of the invention to provide a method for preparing a cheese product with a flavor and texture of a naturally ripened cheese, without requiring longer periods of afterripening.

It is a further object of the invention to provide a method for preparing a spreadable or pumpable cheese with the flavor of a ripened cheese and a smooth texture, at least a texture which resembles that of a soft naturally ripened cheese more than that of a process cheese.

It is a further object of the invention to provide an unpasteurized cheese product consisting of a mixture of an unripened and at least one ripened cheese.

Surprisingly, the inventors have now found that in a specific composition and method for preparing the product according to the invention, at a higher content of ripened cheese, a product is obtained which has a smooth pleasant structure, the flavor of naturally ripened cheese and a good keeping quality and processability.

The present invention relates to a method for preparing an unpasteurized cheese product which comprises mixing unripened cheese in an amount of 10 to less than 30 wt.%, based on the total weight, with at least one type of ripened cheese, at a temperature below the pasteurization temperature, to form a homogeneous and smooth mixture to which no melting salts are added.

In a preferred embodiment of the method, a cheese product is obtained which has a good consistency, the flavor of a naturally ripened cheese and a good keeping quality.

In the mixing process of the method according to the present invention, a good and efficient mixing of the relatively high content of ripened cheese with the unripened cheese and any other ingredients should be obtained. This is preferably done by using high shearing forces, such that no particles observable with the eye are present in the mixture anymore, while the applied melting temperature does not involve the risk of disturbing the desired smooth structure or the inactivation of the enzymes and bacterial cultures present. In order to effect sufficiently high shearing forces, for example a Stephan mixer (Stephan Nederland B.V., Almelo) may be used. The product has the flavor of a ripened cheese. A further afterripening of the product is possible, since through the low melting temperatures the bacterial cultures and enzymes are not inactivated or are inactivated to a limited extent only and can thus ensure a further ripening.

In a preferred embodiment the unripened cheese is, for example, mozzarella, curd cheese, cottage cheese, skim-milk cheese, ricotta, ricotone, pasta filata, scamorza, or any other cheese that is hardly, if at all, ripened.

In a preferred embodiment the ripened cheese may be any ordinary cheese of an older age.

As an indication, the limits of ripened cheese and unripened cheese for the different types can be stated as follows: Gouda cheese for 6 weeks at 13°C or 8 weeks at 6°C; cheddar for 12 weeks at 7°C; and mozzarella for 8 weeks at4°C.

The ripening limits can be defined in terms of protein breakdown. See for a description of this method F.M.W. Visser, Netherlands Milk Dairy Journal, 31, (1977), pages 210-239. In this regard, the ratio between soluble nitrogen (SN)/total content of nitrogen (TN) and amino acid nitrogen (AN)/total content of nitrogen (TN) can be taken into consideration. For example, for Gouda cheese the limit of ripened cheese is for (SN/TN) x 100% at 12% and for AN/TN x 100% at 2%.

A ripened cheese may be, for example, a Gouda, Edam, Leyden, Maasdam, Emmenthal, Frisian Clove, Kernhem, Trappist, Cheddar, or a white mold cheese like Brie, Camembert or blue mold cheese like Gorgonzola, Roquefort, Danish Blue or another mold cheese like Muenster or a combination of two or more of the above cheeses.

In order to be able to meet an increasing demand for skim-milk products or products with a lowered fat content, a skim-milk cheese or a cheese with a lowered fat content may be taken for both the ripened and the unripened cheese or for both cheeses in an embodiment according to the method.

In a further preferred embodiment a whey-protein concentrate is added. The whey protein can serve to improve the structure, which leads to a smoother product with a more pleasant mouthfeel. To improve the structure, a UF cheese as described, for example, in Netherlands patent 190690 may also be used.

Moreover, a product with an adjustable viscosity or firmness can be obtained, while not only a spreadable or pumpable product but also a viscous or cuttable product can be obtained according to need.

As stated above, it is possible that before, during or after the mixing other additives may be added to the mixture, such as condiments, colorings, flavorings, other food additives, bacterial cultures and other microorganisms.

The product may be packed according to the method into, for example, tubs, trays, foil wrappings and the like for direct use or for the purpose of afterripening. The product may also be used to make compositions by mixing with, for example, fruits, meats, vegetables and the like.

Moreover, the product may be confectioned in many forms and compositions, while the final form and composition may be determined according to wish and need. In principle, this confectioning need not interfere with any further afterripening process.

The method and the product according to the invention are further explained but in no way limited by the following examples.

### Example 1

In a Stephan mixer of 75 liters capacity the following mixture was collected:
3.0 kg unripened mozzarella cheese;
9.4 kg foil-ripened cheese, age 5 months;
4.0 kg aqueous solution with 15 wt.% WPC-80; and
1.6 kg water.

The cheese was previously reduced with a Wolf passing machine. The mass of 18 kg cheese was processed as follows: for 1 min at 900 rpm, 1 min at 1800 rpm and 5 min at 2700 rpm, after which the temperature had risen to 37°C. A fine smooth paste had been formed. Subsequently, while heating with steam on the double wall, the mass was further heated in 4 min to 49°C and filled into plastic beakers which were sealed with an aluminum cover and then stored at 4°C. The composition was determined as follows:
57.6 wt.% moisture;
44.5 wt.% fat in the dry substance;
5.50 pH.

After 14 days the product was examined; it was found to be a fine smooth and properly spreadable product with a pure flavor of ripened cheese.

### Example 2

Example 1 was repeated with 10-20 wt.% unripened mozzarella cheese, 40-65 wt.% ripened Gouda cheese and 3 wt.% WPC-80. After treatment according to Example 1 a product was obtained with a moisture content of 57-60 wt.% and a fat content in the dry substance of 40-45 wt.%. After 14 days the product was examined; it was found to be a fine smooth and properly spreadable product with a pure flavor of ripened cheese.

### Example 3

The method as described in EP-B1-0 535 278 was reproduced with raw materials from the same batches as in Example 1:

In a Stephan mixer of 75 liters capacity the following mixture was collected:
9.0 kg unripened mozzarella cheese;
3.4 kg foil-ripened cheese, age 5 months;
4.0 kg aqueous solution with 15 wt.% WPC-80; and
1.6 kg water.

The cheese was previously reduced with a Wolf passing machine. The mass of 18 kg cheese was processed as follows: for 1 min at 900 rpm, 1 min at 1800 rpm and 5 min at 2700 rpm, after which the temperature had risen to 37°C. The paste was still clearly semolina-like. Subsequently, while heating with steam on the double wall, the mass was further heated in 4 min to 51°C and filled into plastic beakers which were sealed with an aluminum cover and then stored at 4°C. The composition was determined as follows:
59.1 wt.% moisture;
39.6 wt.% fat in the dry substance;
5.43 pH.

After 14 days the product was examined; it was found to have a semolina-like consistency and a slight flavor of ripened cheese.

## Claims

1. A method for preparing an unpasteurized cheese product which comprises mixing unripened cheese in an amount of 10 to less than 30 wt.%, based on the total weight, with at least one type of ripened cheese, at a temperature below the pasteurization temperature, to form a homogeneous and smooth mixture to which no melting salts are added.

2. A method according to claim 1, wherein the mixing of the cheese is carried out at a temperature between 20 and 65°C.

3. A method according to claim 1 or 2, wherein the mixing of the cheese is carried out at a temperature between 40 and 60°C.

4. A method according to any one of claims 1-3, wherein a cheese product is obtained which has a good, smooth consistency and the pure flavor of a naturally ripened cheese.

5. A method according to any one of claims 1-4, wherein the ripened cheese to unripened cheese ratio is in the range of 8/1 to 3/1.

6. A method according to any one of claims 1-5, wherein at least one of the unripened or ripened cheeses is a product with a lowered fat content.

7. A method according to any one of claims 1-6, wherein a whey protein concentrate and/or UF cheese is added to the mixture of unripened and ripened cheese.

8. A method according to claims 1-7, wherein flavorings, colorings and other additives and bacterial cultures suitable for foods and other microorganisms are added.

9. A method according to claims 1-8, wherein ingredients such as pieces of fruit, meat, vegetables and the like are added.

10. A cheese product, obtainable according to any one of claims 1-9, wherein the cheese product is spreadable.

11. A cheese product, obtainable according to any one of claims 1-9, wherein the cheese product is cuttable.

12. A cheese product, obtainable according to any one of claims 1-9, wherein the cheese product is viscous.

13. A cheese product, obtainable according to the method of one or more of claims 1-9.

## Patentansprüche

1. Verfahren zum Bereiten eines unpasteurisierten Käseproduktes, welches das Mischen eines ungereiften Käses in einer Menge zwischen 10 und weniger als 30 Gew.-%, basierend auf dem Gesamtgewicht, mit mindestens einer Sorte gereiften Käses bei einer Temperatur unterhalb der Pasteurisierungstemperatur aufweist, zum Bilden einer homogenen und weichen Mischung, welcher keine Schmelzsalze zugeführt werden.

2. Verfahren nach Anspruch 1, **dadurch gekennzeichnet, dass** das Mischen des Käses bei einer Temperatur zwischen 20 und 65°C durchgeführt wird.

3. Verfahren nach Anspruch 1 oder 2, **dadurch gekennzeichnet, dass** das Mischen des Käses bei einer Temperatur zwischen 40 und 60°C durchgeführt wird.

4. Verfahren nach einem der Ansprüche 1 bis 3, **dadurch gekennzeichnet, dass** ein Käseprodukt erhalten wird, welches eine gute, weiche Konsistenz und den reinen Geschmack eines natürlich gereiften Käses aufweist.

5. Verfahren nach einem der Ansprüche 1 bis 4, **dadurch gekennzeichnet, dass** das Verhältnis des gereiften Käses zum ungereiften Käse im Bereich zwischen 8/1 bis 3/1 liegt.

6. Verfahren nach einem der Ansprüche 1 bis 5, **dadurch gekennzeichnet, dass** zumindest einer der ungereiften oder gereiften Käse ein Produkt mit einem gesenkten Fettgehalt ist.

7. Verfahren nach einem der Ansprüche 1 bis 6, **dadurch gekennzeichnet, dass** ein Molke-Protein-Konzentrat und/oder UF-Käse der Mischung des ungereiften und gereiften Käses hinzugefügt wird.

8. Verfahren nach einem der Ansprüche 1 bis 7, **dadurch gekennzeichnet, dass** Geschmacksstoffe, Farbstoffe und andere Additive sowie für Nahrungsmittel geeignete Bakterienkulturen und andere Mikroorganismen hinzugefügt werden.

9. Verfahren nach einem der Ansprüche 1 bis 8, **dadurch gekennzeichnet, dass** Ingredienzien wie Stücke von Früchten, Fleisch, Gemüse od.dgl. hinzugefügt werden.

10. Käseprodukt, hergestellt nach einem der Ansprüche 1 bis 9, **dadurch gekennzeichnet, dass** das Käseprodukt streichfähig ist.

11. Käseprodukt, hergestellt nach einem der Ansprüche 1 bis 9, **dadurch gekennzeichnet, dass** das Käseprodukt schneidfähig ist.

12. Käseprodukt, hergestellt nach einem der Ansprüche 1 bis 9, **dadurch gekennzeichnet, dass** das Käseprodukt viskos ist.

13. Käseprodukt, hergestellt nach dem Verfahren nach einem oder mehreren der Ansprüche 1 bis 9.

## Revendications

1. Procédé de préparation d'un fromage non-pasteurisé, qui comprend le mélange d'un fromage non-affiné, en une proportion de 10 à moins de 30% en poids par rapport au poids total, avec au moins un type de fromage affiné, à une température au-dessous de la température de pasteurisation, pour former un mélange homogène et lisse auquel on n'ajoute aucun sel de fusion.

2. Procédé selon la revendication 1, dans lequel on réalise le mélange des fromages à une température comprise entre 20 et 65°C.

3. Procédé selon la revendication 1 ou 2, dans lequel on réalise le mélange des fromages à une température comprise entre 40 et 60°C.

4. Procédé selon l'une quelconque des revendications 1 à 3, dans lequel on obtient un fromage qui a une consistance bonne et lisse, et la saveur pure d'un fromage naturellement affiné.

5. Procédé selon l'une quelconque des revendications 1 à 4, dans lequel le rapport du fromage affiné au fromage non-affiné est compris dans l'intervalle allant de 8/1 à 3/1.

6. Procédé selon l'une quelconque des revendications 1 à 5, dans lequel au moins l'un du fromage non-affiné et du fromage affiné est un produit ayant une teneur abaissée en matière grasse.

7. Procédé selon l'une quelconque des revendications 1 à 6, dans lequel on ajoute au mélange de fromage non-affiné et de fromage affiné un concentré de protéines de petit lait et/ou un fromage UF.

8. Procédé selon l'une quelconque des revendications 1 à 7, dans lequel on ajoute des arômes, des matières colorantes et d'autres additifs, et des cultures bactériennes convenant pour les aliments et d'autres microorganismes.

9. Procédé selon l'une quelconque des revendications 1 à 8, dans lequel on ajoute des ingrédients, tels que des morceaux de fruits, de viande, de légumes, etc.

10. Fromage que l'on peut obtenir par le procédé selon l'une quelconque des revendications 1 à 9, qui est un fromage que l'on peut étaler.

11. Fromage que l'on peut obtenir par le procédé selon l'une quelconque des revendications 1 à 9, qui est un fromage que l'on peut couper.

12. Fromage que l'on peut obtenir par le procédé selon l'une quelconque des revendications 1 à 9, qui est un fromage visqueux.

13. Fromage que l'on peut obtenir par le procédé selon une ou plusieurs des revendications 1 à 9.
